# EUROPÄISCHE PATENTSCHRIFT

(11) **EP 3 741 598 B1**
(45) Veröffentlichungstag und Bekanntmachung des Hinweises auf die Patenterteilung: **24.11.2021**
(21) Anmeldenummer: 20160835.3
(22) Anmeldetag: 04.03.2020
(51) Int. Cl.: B60R 19/38, B60R 19/48, B60J 5/04, B60R 19/34, B62D 21/15, B62D 25/08

(54) **SCHWENKBARE STOSSSTANGE**
ARTICULATED BUMPER
PARE-CHOCS PIVOTANT

(30) Priorität: 23.05.2019 DE 102019207535
(43) Veröffentlichungstag der Anmeldung: 25.11.2020
(73) Patentinhaber: Ford Global Technologies, LLC, Dearborn, MI 48126 (US)
(72) Erfinder: Duffe, Tobias, 50674 Köln (DE); Lopes dos Santos, Armando, 50737 Köln (DE)
(74) Vertreter: Dörfler, Thomas

(56) Entgegenhaltungen:
- DE-A1- 3 642 245
- FR-A1- 2 944 240

## Beschreibung

Die vorliegende Erfindung betrifft ein Kraftfahrzeug mit einer um eine Fahrzeugquerachse schwenkbaren Heckklappe und einer mit der Heckklappe verbundenen Stoßstange.

Bei Kraftfahrzeugen mit einer schwenkbaren Heckklappe sind Stoßstangen erforderlich, die, neben den gesetzlichen- und sicherheitstechnischen-Vorschriften, auch die Schwenkbewegung der Heckklappe unterstützen. Die sicherheitstechnischen Erfordernisse werden dabei nach dem sogenannten RCAR-Test geprüft. Entsprechende Testverfahren sind dem Fachmann bekannt, so dass nachfolgend auf die Einzelheiten des Tests nicht eingegangen wird. Um die gesetzlichen- und sicherheitstechnischen-Vorschriften zu erfüllen, ist eine robuste Verbindung der hinteren Stoßstange mit der Karosserie des Kraftfahrzeugs erforderlich. Dokument FR2944240 A1 offenbart ein Kraftfahrzeug gemäß dem Oberbegriff des Patentanspruchs 1.

Der vorliegenden Erfindung liegt daher die Aufgabe zu Grunde ein Kraftfahrzeug mit einer schwenkbaren Heckklappe und einer mit der Heckklappe verbundenen Stoßstange bereitzustellen, das eine robuste Verbindung der hinteren Stoßstange mit der Karosserie des Kraftfahrzeugs aufweist und somit die rechtlichen- und sicherheitstechnischen Vorschriften erfüllt.

Erfindungsgemäß wird diese Aufgabe durch ein Kraftfahrzeug mit den Merkmalen des Anspruchs 1 erzielt.

Die Unteransprüche betreffen jeweils bevorzugte Ausgestaltungen bzw. Weiterbildungen der vorliegenden Erfindung, deren jeweilige Merkmale im Rahmen des technisch Sinnvollen ggf. auch über die Kategoriegrenzen der verschiedenen Ansprüche hinweg frei miteinander kombinierbar sind.

Das erfindungsgemäße Kraftfahrzeug weist eine um eine Fahrzeugquerachse schwenkbare Heckklappe und eine mit der Heckklappe, beispielsweise über Abstandshalter, verbundene Stoßstange auf. Bevorzugt ist das Kraftfahrzeug ausgewählt aus der Reihe umfassend Personenkraftwagen, Geländewagen oder Lieferwagen. Weiterhin weist das erfindungsgemäße Kraftfahrzeug eine mit der Fahrzeugkarosserie verbundene Crashbox-Einheit mit mindestens zwei Crashboxen auf, wobei die erste Crashbox fahrerseitig und die zweite Crashbox beifahrerseitig am Heck des Fahrzeugs angeordnet ist. Besonders bevorzugt ist vorgesehen, dass jede der mindestens zwei Crashboxen seitlich der Heckklappe angeordnet ist, so dass die Heckklappe zwischen den Crashboxen schwenkbar ist. Die Crashboxen weisen einen Deformationsbereich auf, der die bei einem Crash frei werdende Energie durch entsprechende Verformungsarbeit absorbiert. Weiterhin weisen die Crashboxen einen mit dem Deformationsbereich verbundenen Klemmbügel mit einem Aufnahmebereich zur Aufnahme der Stoßstange auf, wobei die Crashboxen zusätzlich innerhalb des Deformationsbereichs ein Verbindungsmittel umfassen, das sich im Crashfall mit der Stoßstange verbindet.

Bei einer geschlossenen Heckklappe wird die hintere Stoßstange, die beispielsweise über Abstandshalter an der Außenseite der Heckklappe fest angeordnet ist, zusätzlich durch die Klemmbügel in Position gehalten. In einem Crashfall, wie er beispielsweise in einem RCAR-Test simuliert wird, trifft der Stoßkörper zunächst mittig auf die hintere Stoßstange auf, die sich in Folge des Aufschlags in Richtung der Heckklappe verformt. Die äußeren Bereiche der Stoßstange werden durch die Klemmbügel, die der freiwerdenden Energie zunächst widerstehen, lokal abgesichert. Im weiteren zeitlichen Verlauf wird die Stoßstange weiter in Richtung der Heckklappe gedrückt und der Deformationsbereich der Crashboxen fängt an sich zu verformen. Die innerhalb des Deformationsbereichs angeordneten Verbindungsmittel verbinden sich ab einem bestimmten Verformungszeitpunkt mit der Stoßstange, so dass eine robuste Verbindung zwischen der hinteren Stoßstange und der Crashbox-Einheit des Fahrzeugs entsteht. Hierdurch kann die gesamte während des RCAR-Tests freiwerdende Energie wirkungsvoll absorbiert werden. Die rechtlichen- und sicherheitstechnischen Vorschriften werden vollständig erfüllt.

Die Heckklappe kann vorzugsweise derart um eine Fahrzeugquerachse schwenkbar angeordnet sein, dass sie im geöffneten Zustand die Ladefläche des Fahrzeugs verlängert. Mit anderen Worten weist die, im geschlossenen Zustand in den Fahrgastinnenraum gerichtete, Innenseite der Heckklappe im geöffneten Zustand das gleiche Höhenniveau auf, wie die Ladefläche des Kraftfahrzeugs.

In einer bevorzugten Ausführungsvariante ist die Stoßstange über ein flexibles Verbindungselement mit der Heckklappe verbunden. Durch das flexible Verbindungselement, beispielsweise auf Basis eines Elastomers, kann ein Teil der in einem Crash freiwerdenden Energie zusätzlich absorbiert werden, was die Crashperformance verbessert.

Das Verbindungsmittel, das sich im Crashfall mit der Stoßstange verbindet umfasst vorzugsweise einen sich in Richtung des Klemmbügels axial erstreckenden Dorn, der mit einer in der Stoßstange angeordneten korrespondierenden Dornaufnahme verbindbar ist und somit im Crashfall eine robuste Formschlussverbindung zwischen Dorn und Dornaufnahme bzw. zwischen der hinteren Stoßstange und der Crashbox-Einheit des Fahrzeugs bildet.

Um die Gefahr eines Verkantens zwischen Dorn und Dornaufnahme im Crashfall zu reduzieren, bzw. das Eingehen der Verbindung zu unterstützen, weist der Dorn vorzugsweise ein konisch ausgebildetes Ende auf. Der zur Stoßstange hin orientierte Teil des Dornkörpers verjüngt sich somit in seinem Querschnitt. Besonders bevorzugt weist der Dorn eine stumpfe Spitze auf.

In einer besonders vorteilhaften Ausführungsvariante ist vorgesehen, dass auch die Dornaufnahme eine Form aufweist, die das Eingehen der Verbindung zwischen Dorn und Dornaufnahme unterstützt. Hierzu weist die Dornaufnahme vorzugsweise im Eingangsbereich zusätzlich einen konisch ausgebildeten Bereich auf. Die Loch-öffnung in der Stoßstange, die die Dornaufnahme bildet, verjüngt sich somit in ihrem Querschnitt mit fortschreitender Tiefe, bevor sie einen konstanten Querschnitt erreicht.

Bei Simulationsversuchen hat sich gezeigt, dass eine besonders robuste Verbindung zwischen der Crashbox-Einheit und der Stoßstange im Crashfall erzielt werden kann, wenn die axiale Länge des Dorns im Vergleich zu der axialen Länge des Deformationsbereichs der Crashbox eine spezifische Länge aufweist. Bevorzugt erstreckt sich der Dorn daher mindestens über die halbe axiale Länge des Deformationsbereichs, mehr bevorzugt über mindestens dreiviertel der axialen Länge und ganz besonders bevorzugt über mindestens 90 % der axialen Länge des Deformationsbereichs.

In einer weiteren vorteilhaften Ausführungsvariante ist der Klemmbügel verstärkt. Hierzu weist der Klemmbügel vorzugsweise eine separate Verstärkungsschicht, beispielsweise aus einem Metall oder einem vorteilhaften Verbundwerkstoff, auf. Diese kann lediglich einen Teil der äußeren Oberfläche des Klemmbügels, mehr bevorzugt die gesamte äußere Oberfläche des Klemmbügels überziehen. Die separate Verstärkungsschicht wirkt hierbei als zusätzlicher Energieabsorber und verbessert nochmals die Crashperformance.

In einer bevorzugten Ausführungsvariante ist der Klemmbügel mit dem Deformationsbereich der Crashbox fest, und somit unbeweglich, verbunden. Der Klemmbügel kann hierbei separat oder alternativ mit dem Deformationsbereich einstückig ausgebildet sein. Der Aufnahmebereich für die Stoßstange ist im Wesentlich rechteckig ausgebildet, so dass er ein Teil der Querschnittsform der Stoßstange umfassen kann. In dieser Ausführungsvariante ist die Stoßstange durch eine zur Längsachse der Crashbox rein vertikal verlaufende Linearbewegung aufnehmbar. Vorteilhafterweise weist die Crashbox zudem eine zu ihrer Längsachse orthogonal ausgebildete Stirnfläche auf, über die die Stoßstange in den Aufnahmebereich gleiten kann.

In einer anderen bevorzugten Ausführungsvariante ist der Klemmbügel schwenkbar ausgebildet, und um eine horizontale Achse, die durch den Deformationsbereich hindurch angeordnet ist, schwenkbar. Der Aufnahmebereich für die Stoßstange ist ebenfalls im Wesentlichen rechteckig ausgebildet, so dass er ein Teil der Querschnittsform der Stoßstange umfassen kann. In dieser Ausführungsvariante ist die Stoßstange durch eine zur Längsachse der Crashbox kreisförmig verlaufende Bewegung aufnehmbar. Vorteilhafterweise weist die Crashbox hierzu eine zu ihrer Längsachse abgerundete Stirnfläche auf, über die die Stoßstange in den Aufnahmebereich gleiten kann.

Um den Klemmbügel in der gewünschten Position zu halten, ist dieser mit der Crashbox zusätzlich über ein Rückstellelement, beispielsweise eine Feder, verbunden.

Zum Öffnen der Heckklappe muss die Stoßstange aus dem Klemmbügel befreit werden. Hierzu ist vorteilhafterweise ein Mechanismus vorgesehen, der beim Öffnen der Heckklappe den Klemmbügel bewegt. Nachdem die Stoßstange aus dem Klemmbügel heraus bewegt worden ist, wird der Klemmbügel über das Rückstellelement in seine ursprüngliche Position zurückbewegt.

Weitere Vorteile und Merkmale des erfindungsgemäßen Kraftfahrzeugs ergeben sich aus den nachfolgenden Ausführungsbeispielen, die anhand von Zeichnungen näher erläutert werden. In dieser zeigen:
- Fig. 1a - 1d: eine schematische Querschnittsansicht eines Hecks eines Kraftfahrzeugs mit einer um eine Fahrzeugquerachse schwenkbaren Heckklappe gemäß einer ersten Ausführungsvariante,
- Fig. 2: einen vollständigen Bewegungsverlauf der an der Heckklappe installierten hinteren Stoßstange gemäß der ersten Ausführungsvariante,
- Fig. 3a + 3b: eine schematische Darstellung der Verbindung zwischen einer Crashbox-Einheit und der Stoßstange gemäß der ersten Ausführungsvariante,
- Fig. 4a - 4c: drei schematische Querschnittsdarstellungen der in Fig. 3a gezeigten Ausführungsvariante,
- Fig. 5a + b: eine schematische Darstellung des Verlaufs eines RCAR-(Bumper)-Tests der in den Figuren 3a und 3b gezeigte Ausführungsvariante,
- Fig. 6a - c: eine schematische Darstellung des Verlaufs des RCAR-(Structure)-Tests der in den Figuren 3a und 3b gezeigte Ausführungsvariante,
- Fig. 7a - 7d: eine schematische Querschnittsansicht eines Hecks eines Kraftfahrzeugs mit einer um eine Fahrzeugquerachse schwenkbaren Heckklappe gemäß einer zweiten Ausführungsvariante,
- Fig. 8: einen vollständigen Bewegungsverlauf der an der Heckklappe installierten hinteren Stoßstange gemäß der zweiten Ausführungsvariante,
- Fig. 9: eine schematische Darstellung der Verbindung zwischen der Crashbox-Einheit und der Stoßstange gemäß der zweiten Ausführungsvariante,
- Fig. 10a + 10b: eine schematische Darstellung einer Öffnung der Heckklappe gemäß einer Ausführungsvariante, und
- Fig. 11a + 11b: eine schematische Darstellung einer Schließung der Heckklappe gemäß der in Fig. 10a + 10b dargestellten Ausführungsvariante.

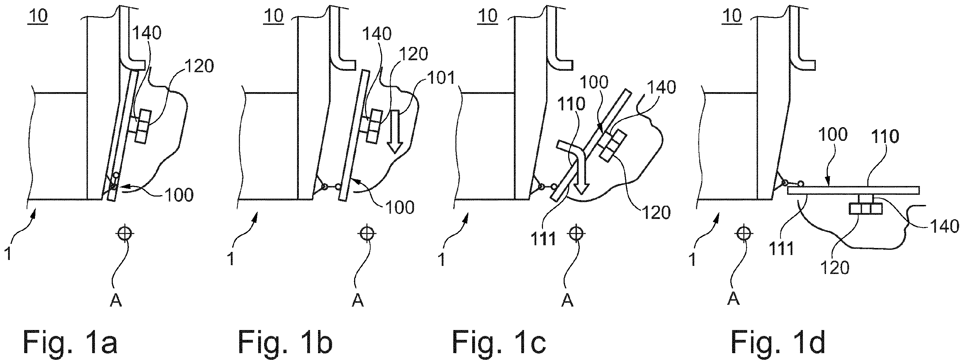

In den Figuren 1a bis 1d ist jeweils eine schematische Querschnittsansicht eines Hecks eines Kraftfahrzeugs 1 mit einer um eine Fahrzeugquerachse (A) schwenkbaren Heckklappe 100 gemäß einer ersten Ausführungsvariante in unterschiedlichen Öffnungs- bzw. Schließzuständen dargestellt. Die Heckklappe 100 weist eine zum Fahrgastinnenraum 10 gerichtete Innenseite 110 und eine gegenüberliegend angeordnete Außenseite 111 auf (Fig. 1c). An der Außenseite 111 ist eine hintere Stoßstange 120 angebracht, die über ein Verbindungselement 140 mit der Heckklappe 100 verbunden ist. Das Verbindungselement 140 kann ein konventioneller, dem Fachmann aus dem Stand der Technik bekannter Abstandshalter sein. Vorzugsweise ist das Verbindungselement 140 jedoch flexibel ausgebildet, beispielsweise aus einem Elastomer.

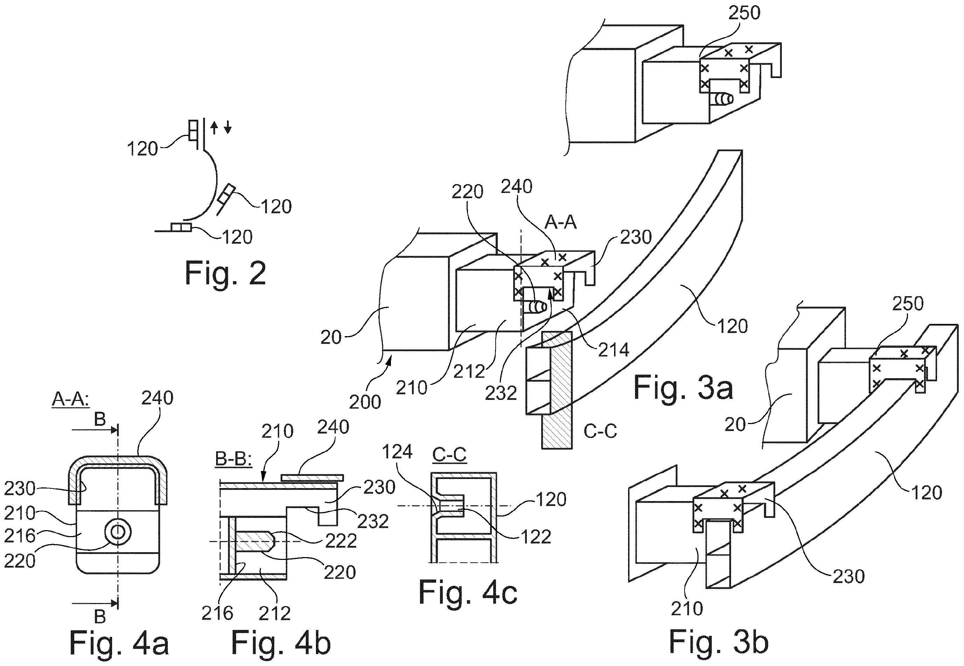

Die in den Figuren 1a bis 1d dargestellte horizontal schwenkbare Heckklappe 100 weist einen sog. unabhängigen Öffnungs- bzw. Schließungsverlauf auf, der ein Öffnen und Schließen der Heckklappe 100 erlaubt. In der Figur 1a befindet sich die Heckklappe 100 im geschlossenen Zustand. Zum Öffnen der Heckklappe 100 bewegt sich diese zunächst in negativer Z-Richtung bezogen auf ein kartesisches Koordinatensystem, bzw. in Richtung der Erdoberfläche, wie dies anhand des Pfeils 101 in der Figur 1b verdeutlicht ist. Anschließend erfolgt eine Schwenkbewegung der Heckklappe 100 bis zum vollständigen Öffnungszustand (Fig. 1d). In Figur 2 ist der Öffnungs- bzw. Schließungsverlauf nochmals als Kurvenfunktion schematisch dargestellt.

Die Figuren 3a und 3b zeigen eine schematische Darstellung der Verbindung zwischen einer Crashbox-Einheit 200 und der Stoßstange 120 gemäß einer ersten Ausführungsvariante.

In der vorliegend dargestellten Ausführungsvariante umfasst die Crashbox-Einheit 200 zwei separate Crashboxen 210, 250, die identisch aufgebaut sind und mit einer Karosserie 20 des Kraftfahrzeugs 1 verbunden sind. Die Crashbox 210 ist dabei fahrerseitig und die zweite Crashbox 250 beifahrerseitig am Heck des Kraftfahrzeugs 1 angeordnet. Da die Crashboxen 210, 250 einen identischen Aufbau aufweisen, werden die weiteren Merkmale - der Übersichtlichkeit halber - lediglich anhand der Crashbox 210 dargestellt.

Die Crashbox 210 umfasst einen Deformationsbereich 212 sowie einen mit dem Deformationsbereich 212 fest verbundenen Klemmbügel 230 mit einem Aufnahmebereich 232 zur Aufnahme der Stoßstange 120 auf. In der vorliegend dargestellten Ausführungsvariante ist der Klemmbügel 230 separat ausgebildet und mit dem Deformationsbereich 212 der Crashbox 210 fest und somit unbeweglich verbunden.

Alternativ kann der Klemmbügel 230 mit dem Deformationsbereich 212 auch einstückig ausgebildet sein.

Der Klemmbügel 230 wirkt vorzugsweise verstärkend auf die Crashboxen 210, 250 im Crashfall.

Der Aufnahmebereich 232 für die Stoßstange 120 ist im Wesentlichen rechteckig ausgebildet, so dass er ein Teil der Querschnittsform der Stoßstange 120 umfassen kann. Wie aus der Figur 2 und 3a ersichtlich, ist die Stoßstange 120 durch eine zur Längsachse der Crashbox 210 vertikal verlaufende Linearbewegung aufnehmbar. Die Crashbox 210 weist zudem eine zu ihrer Längsachse orthogonal ausgebildete Stirnfläche 214 auf, über die die Stoßstange 120 in den Aufnahmebereich 232 gleiten kann.

Weiterhin umfasst die Crashbox 210 in der vorliegend dargestellten Ausführungsvariante innerhalb des Deformationsbereichs 212 einen sich in Richtung des Klemmbügel 230 axial erstreckenden Dorn 220, der im Crashfall mit einer in der Stoßstange 120 angeordneten Dornaufnahme 122 verbindbar ist (siehe Fig. 4c).

Figur 3a zeigt eine Positionierung der hinteren Stoßstange 120 in Bezug zu den Crashboxen 210, 250 gemäß dem in Figur 1b gezeigten Zustand der Heckklappe 100, die den normalen Fahrmodus repräsentiert, d.h. die Heckklappe 100 befindet sich im geschlossen Zustand, wie dies auch in Figur 1a gezeigt ist.

Wie insbesondere aus Figur 3b ersichtlich, ist die Stoßstange 120 mit den Crashboxen 210, 250 über einen Klemmbügel 230 verbunden.

Nachfolgend wird auf die Figuren 4a bis 4c eingegangen, die jeweils unterschiedliche Querschnittsdarstellungen der in Fig. 3a und 3b gezeigten ersten Ausführungsvariante der in schematischer Darstellung zeigen.

Figur 4a zeigt zunächst eine Querschnittsdarstellung der Crashbox 210 gemäß Schnittebene A-A. Wie anhand der Figur 4a erkennbar, wird die Crashbox 210 durch ein weitestgehend rechteckig ausgebildetes Hohlprofil gebildet. Im oberen Bereich der Fig. 4a ist der Klemmbügel 230 positioniert, der im Vergleich zu übrigen Wandung der Crashbox 210 dicker ausgebildet ist und einen Teil des Querschnitts der Crashbox 210 U-förmig umgibt.

Wie insbesondere aus der Figur 4a und 4b ersichtlich, weist der Klemmbügel 230 eine Verstärkung 240 auf, die in der dargestellten Ausführungsvariante den Klemmbügel 230 U-förmig umgibt und diesen verstärkt.

Weiterhin ist in der Figur 4a der innerhalb des Deformationsbereichs 212 sich in Richtung des Klemmbügels 230 axial erstreckende Dorn 220 erkennbar, der in der vorliegenden Ausführungsvariante auf einer Wand 32 angeordnet ist und einen im Wesentlichen zylindrischen Grundkörper besteht. Der Dorn 220 weist ein konisch ausgebildetes Ende in der Form einer stumpfen Spitze 222 auf (siehe Fig. 4b) und erstreckt sich mindestens über die halbe axiale Länge des Deformationsbereichs 212.

Schließlich ist in Figur 4c eine Querschnittsdarstellung der hinteren Stoßstange 120 gemäß Schnittebene C-C gezeigt. Anhand der Figur 4c ist die Ausgestaltung der Dornaufnahme 122 erkennbar, die einen zu dem Dorn 220 größeren und konisch ausgebildeten Eingang 124 aufweist, der sich sodann zylindrisch fortsetzt.

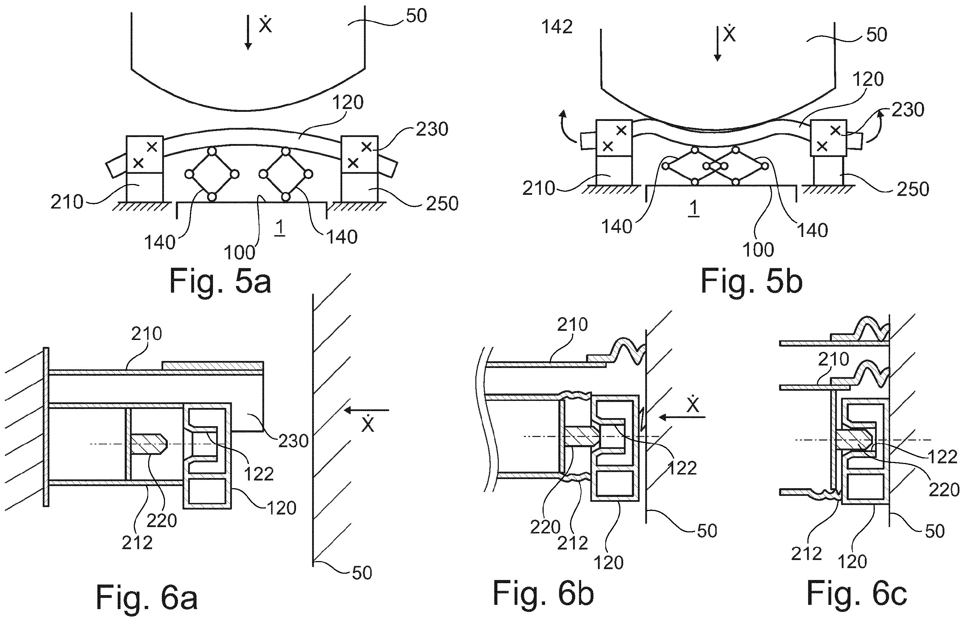

Die Figuren 5a und 5b zeigen eine schematische Darstellung eines Verlaufs des RCAR-(Bumper)-Tests aus der Draufsicht. Hierbei wird ein Stoßkörper 50 mit dem Heck des Fahrzeugs 1 zur Kollision gebracht.

Die in den Figuren 5a und 5b gezeigte Stoßstange 120 befindet sich im geschlossenen Zustand, wie bereits in Figur 1a gezeigt, und ist über zwei im mittleren Bereich des Fahrzeughecks angeordnete flexible Verbindungselemente 140 mit der Heckklappe 100 verbunden. Die flexiblen Verbindungselemente 140 sind in der vorliegenden Ausführungsvariante rautenförmig ausgebildet, so dass ein Teil der in einem Crash freiwerdenden Energie durch Verformungsarbeit absorbiert werden kann. Im äußeren Bereich des Fahrzeughecks wird die Stoßstange 120 zusätzlich durch die Klemmbügel 230 in Position gehalten. Besonders bevorzugt ist vorgesehen, dass jede der mindestens zwei Crashboxen 210, 250 seitlich der Heckklappe 100 angeordnet ist, so dass die Heckklappe 100 zwischen den Crashboxen 210, 250 schwenkbar ist.

In einem Crashfall, wie er in Figur 5b gezeigt wird, trifft der Stoßkörper 50 zunächst mittig auf die hintere Stoßstange 120 auf, die sich in Folge des Aufschlags in Richtung der Heckklappe 100 verformt. Die äußeren Bereiche der Stoßstange 120 werden durch die Klemmbügel 230, die der freiwerdenden Energie zunächst widerstehen, lokal abgesichert. Im weiteren zeitlichen Verlauf, siehe die Figuren 6a bis 6c, wird die Stoßstange 120 weiter in Richtung der Heckklappe 100 gedrückt und der Deformationsbereich 212 der Crashbox 210 fängt an sich zu verformen. Die in der Stoßstange 120 vorhandenen Dornaufnahmen 122 nehmen ab einem bestimmten Verformungszeitpunkt den innerhalb des ersten Deformationsbereichs 212 angeordneten Dorn 220 auf, wobei das Eingehen der Verbindung zwischen Dorn 220 und Dornaufnahme 122 durch die konische Ausgestaltung beider Elemente unterstützt wird. Wie anhand Fig. 6c erkennbar, entsteht wird der Dorn 220 vollständig durch die Dornaufnahme 122 aufgenommen, so dass eine robuste Formschlussverbindung zwischen Dorn 220 und Dornaufnahme 122 bzw. zwischen der hinteren Stoßstange 120 und der Crashbox-Einheit 200 des Fahrzeugs 1 entsteht. Hierdurch wird die Stoßstange 120 in Position gehalten und die kinetische Energie des RCAR-Tests kann wirkungsvoll in die Crashboxen 210, 250 übertragen und dort absorbiert werden.

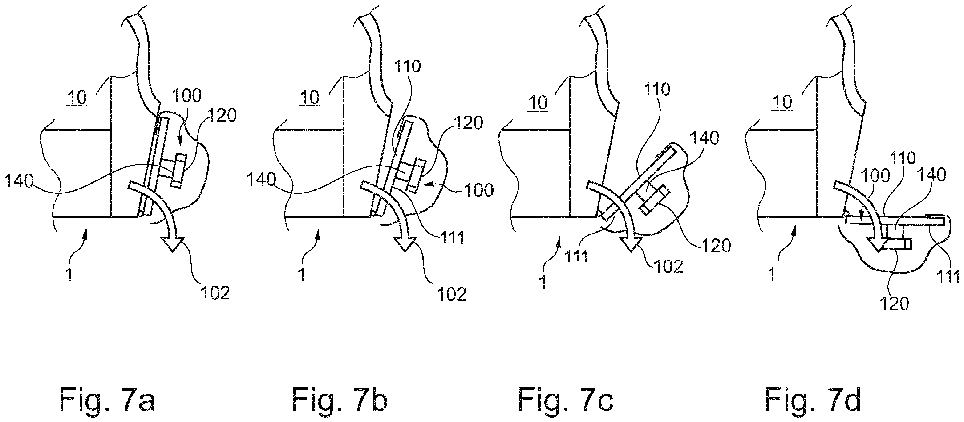

Die Figuren 7a bis 7d zeigen jeweils eine schematische Querschnittsansicht eines Hecks eines Kraftfahrzeugs 1 mit einer um eine Fahrzeugquerachse (A) schwenkbaren Heckklappe 100 gemäß einer zweiten Ausführungsvariante in unterschiedlichen Öffnungs- bzw. Schließzuständen. Die Heckklappe 100 weist eine zum Fahrgastinnenraum 10 gerichtete Innenseite 110 und eine gegenüberliegend angeordnete Außenseite 111 auf (Fig. 7b - 7d). An der Außenseite 111 ist eine hintere Stoßstange 120 angebracht, die über ein Verbindungselement 140 mit der Heckklappe 100 verbunden ist. Das Verbindungselement 140 kann ein konventioneller, dem Fachmann aus dem Stand der Technik bekannter Abstandshalter sein. Vorzugsweise ist das Verbindungselement 140 jedoch flexibel ausgebildet, beispielsweise aus einem Elastomer.

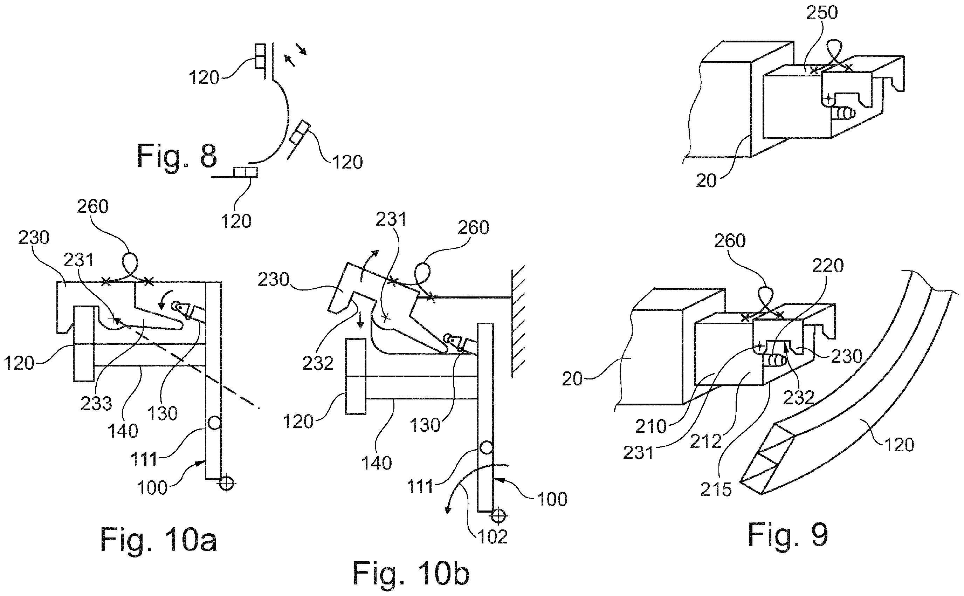

Die in den Figuren 7a bis 7d dargestellte um eine Fahrzeugquerachse (A) schwenkbare Heckklappe 100 weist einen sog. abhängigen Öffnungs- bzw. Schließungsverlauf auf, der ein Öffnen und Schließen der Heckklappe 100 erlaubt. Der abhängige Öffnungs- bzw. Schließungsverlauf zeichnet sich durch eine reine Schwenkbewegung aus, wie dies anhand des Pfeils 102 in den Figuren 7a bis 7d und in Figur 8 nochmals als Kurvenfunktion schematisch dargestellt ist.

Die Figur 9 zeigt eine schematische Darstellung der Verbindung zwischen der Crashbox-Einheit 200 und der Stoßstange 120 gemäß der zweiten Ausführungsvariante.

In der vorliegend dargestellten Ausführungsvariante umfasst die Crashbox-Einheit 200 ebenfalls zwei separate Crashboxen 210, 250, die identisch aufgebaut sind und mit der Karosserie 20 des Kraftfahrzeugs 1 verbunden sind. Die Crashbox 210 ist dabei fahrerseitig und die zweite Crashbox 250 beifahrerseitig am Heck des Kraftfahrzeugs 1 angeordnet. Da die Crashboxen 210, 250 einen identischen Aufbau aufweisen, werden die weiteren Merkmale - der Übersichtlichkeit halber - lediglich anhand der Crashbox 210 dargestellt.

Die Crashbox 210 umfasst einen Deformationsbereich 212 sowie einen mit dem Deformationsbereich 212 schwenkbar angeordneten Klemmbügel 230 mit einem Aufnahmebereich 232 zur Aufnahme der Stoßstange 120 auf. Der Klemmbügel 230 ist hierbei separat ausgebildet und um eine horizontale Achse 231, die durch den Deformationsbereich 232 hindurch angeordnet ist, schwenkbar. Der Aufnahmebereich 232 für die Stoßstange 120 ist ebenfalls rechteckig ausgebildet, so dass er ein Teil der Querschnittsform der Stoßstange 120 umfassen kann. In dieser Ausführungsvariante ist die Stoßstange 120 durch eine zur Längsachse der Crashbox 210 kreisförmig verlaufende Bewegung aufnehmbar, wie sie anhand der Fig. 8 schematisch dargestellt ist. Hierzu weist die Crashbox 210 eine zu ihrer Längsachse abgerundete Stirnfläche 215 auf, über die die Stoßstange 120 in den Aufnahmebereich 232 gleiten kann. Um den Klemmbügel 230 in der gewünschten Position zu halten, ist dieser mit der Crashbox 210 zusätzlich über ein Rückstellelement 260, beispielsweise eine Feder, verbunden.

Weiterhin umfasst die Crashbox 210 innerhalb des Deformationsbereichs 212 einen sich in Richtung des Klemmbügel 230 axial erstreckenden Dorn 220, der im Crashfall mit einer in der Stoßstange 120 angeordneten Dornaufnahme 122 verbindbar ist (siehe Fig. 4c).

Zum Öffnen der Heckklappe 100 muss die Stoßstange 120 aus dem Klemmbügel 230 befreit werden. Hierzu ist vorteilhafterweise ein Mechanismus vorgesehen, der beim Öffnen der Heckklappe 100 den Klemmbügel 230 bewegt. Nachdem die Stoßstange 120 aus dem Klemmbügel 230 heraus bewegt worden ist, wird der Klemmbügel 230 über das Rückstellelement 260 in seine ursprüngliche Position zurückbewegt.

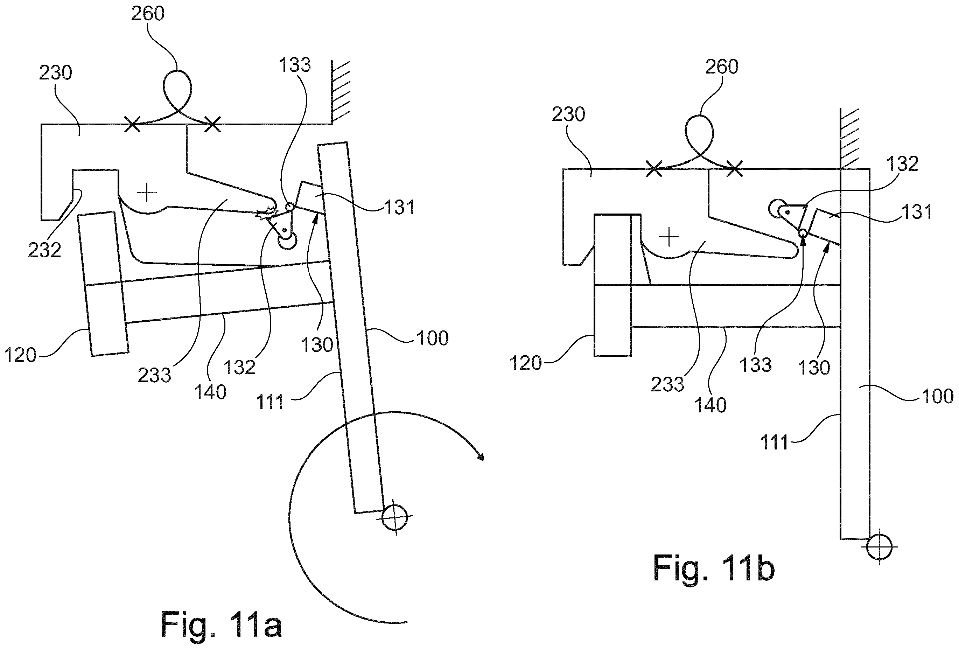

Die Figuren 10a und 10b verdeutlichen in schematischer Darstellung das Öffnen der Heckklappe 100 und die Figuren 11a und 11b das Schließen der Heckklappe 100 in einer möglichen Ausführungsvariante.

Wie anhand der Figur 10a und 10b dargestellt ist, weist der Klemmbügel 230 einen Hebelarm 233 auf, der sich in Richtung der Heckklappe 100 erstreckt und mit einem an der Außenseite 111 der Heckklappe 100 positioniertem Mitnehmer 130 zusammenwirkt. Beim Öffnen der Heckklappe 100 trifft der Mitnehmer 130 auf den Arm 233, so dass der Klemmbügel 230 bewegt und die Stoßstange 120 aus dem Klemmbügel 230 befreit wird.

Der Mitnehmer 130 besteht aus einem Grundkörper 131 und einer beweglichen Spitze 132, die über ein Rückstellelement 133 mit dem Grundkörper 131 verbunden ist (Fig. 11a + 11b). Beim Schließen trifft der mit der Heckklappe 100 fest verbundene Mitnehmer 130 die untere Seite des Arms 233 des Klemmbügels 230. Da die Spitze 132 beweglich ist, kann der Mitnehmer 130 den Arm 233 passieren, so dass die Heckklappe 100 geschlossen werden kann.

### Bezugszeichen

- 1: Kraftfahrzeug
- 10: Fahrgastinnenraum
- 20: Karosserie
- 50: Stoßkörper
- 100: Heckklappe
- 101: Pfeil
- 110: Innenseite der Heckklappe
- 111: Außenseite der Heckklappe
- 120: Stoßstange
- 122: Dornaufnahme
- 124: Eingang
- 130: Mitnehmer
- 131: Grundkörper
- 132: Spitze
- 133: Rückstellelement
- 140: Verbindungselement
- 200: Crashbox-Einheit
- 210: Crashbox
- 212: Deformationsbereich
- 214: Stirnfläche
- 215: Stirnfläche
- 216: Wand
- 220: Dorn
- 222: Spitze
- 230: Klemmbügel
- 231: Achse
- 232: Aufnahmebereich
- 233: Hebelarm
- 240: Verstärkung
- 250: Crashbox
- 260: Rückstellelement
- (A): Fahrzeugquerachse

## Patentansprüche

1. Kraftfahrzeug (1) umfassend:
eine um eine Fahrzeugquerachse (A) schwenkbare Heckklappe (100),
eine mit der Heckklappe (100) verbundene Stoßstange (120), **gekennzeichnet durch**
eine mit einer Fahrzeugkarosserie (20) des Kraftfahrzeugs (1) verbundene Crashbox-Einheit (200) mit mindestens zwei Crashboxen (210, 250), wobei die Crashboxen (210, 250) einen Deformationsbereich (212) und einen mit dem Deformationsbereich (212) verbundenen Klemmbügel (230) mit einem Aufnahmebereich (232) zur Aufnahme der Stoßstange (120) aufweisen, und wobei
die Crashboxen (210, 250) innerhalb des Deformationsbereichs (212) ein Verbindungsmittel umfassen, das sich im Crashfall mit der Stoßstange (120) verbindet.

2. Kraftfahrzeug (1) nach Anspruch 1, wobei die Stoßstange (120) über ein flexibles Verbindungselement (140) mit der Heckklappe (100) verbunden ist.

3. Kraftfahrzeug (1) nach Anspruch 1 oder 2, wobei das Verbindungsmittel einen sich in Richtung des Klemmbügels (230) axial erstreckenden Dorn (220) umfasst, der mit einer in der Stoßstange (120) angeordneten Dornaufnahme (122) verbindbar ist.

4. Kraftfahrzeug (1) nach Anspruch 3, wobei der Dorn (220) ein konisch ausgebildetes Ende, vorzugsweise mit einer stumpfen Spitze (222), aufweist.

5. Kraftfahrzeug (1) nach Anspruch 3 oder 4, wobei der Dorn (220) sich mindestens über die halbe axiale Länge des Deformationsbereichs (212) erstreckt.

6. Kraftfahrzeug (1) nach einem der Ansprüche 3 bis 5, wobei die Dornaufnahme (122) einen konisch ausgebildeten Eingang (124) aufweist.

7. Kraftfahrzeug (1) nach einem der vorhergehenden Ansprüche, wobei der Klemmbügel (230) verstärkt ist.

8. Kraftfahrzeug (1) nach einem der vorhergehenden Ansprüche, wobei jede der mindestens zwei Crashboxen (210, 250) seitlich der Heckklappe (100) angeordnet ist, so dass die Heckklappe (100) zwischen den Crashboxen (210, 250) schwenkbar ist.

9. Kraftfahrzeug (1) nach einem der vorhergehenden Ansprüche, wobei der Klemmbügel (230) mit dem Deformationsbereich (212) der Crashbox (210, 250) fest verbunden ist.

10. Kraftfahrzeug (1) nach einem der Ansprüche 1 bis 8, wobei der Klemmbügel (230) schwenkbar ausgebildet ist.

## Claims

1. Motor vehicle (1) comprising:
a tailgate (100) which can be pivoted about a vehicle transverse axis (A),
a bumper (120) which is connected to the tailgate (100), **characterized by**
a crash box unit (200) which is connected to a vehicle body (20) of the motor vehicle (1) and has at least two crash boxes (210, 250), the crash boxes (210, 250) having a deformation region (212) and a clamping bracket (230) which is connected to the deformation region (212) and has a receiving region (232) for receiving the bumper (120), and
the crash boxes (210, 250) comprising a connecting means within the deformation region (212), which connecting means connects to the bumper (120) in the case of a crash.

2. Motor vehicle (1) according to Claim 1, the bumper (120) being connected via a flexible connecting element (140) to the tailgate (100).

3. Motor vehicle (1) according to Claim 1 or 2, the connecting means comprising a mandrel (220) which extends axially in the direction of the clamping bracket (230) and can be connected to a mandrel receptacle (122) which is arranged in the bumper (120).

4. Motor vehicle (1) according to Claim 3, the mandrel (220) having a conically configured end, preferably with a blunt tip (222).

5. Motor vehicle (1) according to Claim 3 or 4, the mandrel (220) extending at least over half the axial length of the deformation region (212).

6. Motor vehicle (1) according to one of Claims 3 to 5, the mandrel receptacle (122) having a conically configured inlet (124).

7. Motor vehicle (1) according to one of the preceding claims, the clamping bracket (230) being reinforced.

8. Motor vehicle (1) according to one of the preceding claims, each of the at least two crash boxes (210, 250) being arranged to the side of the tailgate (100), with the result that the tailgate (100) can be pivoted between the crash boxes (210, 250).

9. Motor vehicle (1) according to one of the preceding claims, the clamping bracket (230) being connected fixedly to the deformation region (212) of the crash box (210, 250).

10. Motor vehicle (1) according to one of Claims 1 to 8, the clamping bracket (230) being of pivotable configuration.

## Revendications

1. Véhicule automobile (1) comprenant :
un hayon (100) pouvant pivoter sur un axe transversal (A) du véhicule,
un pare-chocs (120) relié au hayon (100),
**caractérisé par**
une unité d'absorbeurs de chocs (200) reliée à une carrosserie (20) du véhicule automobile (1) et comportant au moins deux absorbeurs de chocs (210, 250), les absorbeurs de chocs (210, 250) comportant une zone de déformation (212) et un étrier de serrage (230) relié à la zone de déformation (212) et pourvu d'une zone de réception (232) destinée à recevoir le pare-chocs (120), et
les absorbeurs de chocs (210, 250) comprenant à l'intérieur de la zone de déformation (212) un moyen de liaison qui se lie au pare-chocs (120) en cas de collision.

2. Véhicule automobile (1) selon la revendication 1, le pare-chocs (120) étant relié au hayon (100) par le biais d'un élément de liaison souple (140).

3. Véhicule automobile (1) selon la revendication 1 ou 2, le moyen de liaison comprenant un mandrin (220) qui s'étend axialement en direction de l'étrier de serrage (230) et qui peut être relié à un logement de mandrin (122) disposé dans le pare-chocs (120).

4. Véhicule automobile (1) selon la revendication 3, le mandrin (220) comportant une extrémité conique, de préférence à pointe émoussée (222).

5. Véhicule automobile (1) selon la revendication 3 ou 4, le mandrin (220) s'étendant au moins sur la moitié de la longueur axiale de la zone de déformation (212) .

6. Véhicule automobile (1) selon l'une des revendications 3 à 5, le logement de mandrin (122) comportant une entrée (124) de forme conique.

7. Véhicule automobile (1) selon l'une des revendications précédentes, l'étrier de serrage (230) étant renforcé.

8. Véhicule automobile (1) selon l'une des revendications précédentes, chacun des au moins deux absorbeurs de chocs (210, 250) étant disposé latéralement au hayon (100) de sorte que le hayon (100) puisse pivoter entre les absorbeurs de chocs (210, 250) .

9. Véhicule automobile (1) selon l'une des revendications précédentes, l'étrier de serrage (230) étant relié de manière fixe à la zone de déformation (212) de l'absorbeur de chocs (210, 250).

10. Véhicule automobile (1) selon l'une des revendications 1 à 8, l'étrier de serrage (230) étant conçu de manière à pouvoir pivoter.
